# EUROPEAN PATENT APPLICATION

(11) **EP 1 752 883 A1**
(43) Date of publication of application: **14.02.2007**
(21) Application number: 05739226.8
(22) Date of filing: 13.05.2005
(51) Int. Cl.: G06F 15/00, H04L 12/56, H04L 12/66

(54) **COMMUNICATION SYSTEM**

(30) Priority: 19.05.2004 JP 2004149126
(71) Applicant: MATSUSHITA ELECTRIC INDUSTRIAL CO., LTD., Osaka 571-8501 (JP)
(72) Inventor: ODAWARA, So c/o Matsushita El. Ind. Co., Ltd, Osaka 540-6319 (JP); NISHIYAMA, Takuo c/o Matsushita El. Ind. Co., Ltd, Osaka 540-6319 (JP); SEGAWA, Takayuki c/o Matsushita El. Ind. Co., Ltd, Osaka 540-6319 (JP); NAKAMURA, Manabu c/o Matsushita El. Ind. Co., Ltd, Osaka 540-6319 (JP); MATSUNAGA, M. c/o Matsushita El. Ind. Co., Ltd, Osaka 540-6319 (JP); HASHIMOTO, Yuji c/o Matsushita El. Ind. Co., Ltd, Osaka 540-6319 (JP); MIZUTANI, Mikio c/o Matsushita El. Ind. Co., Ltd, Osaka 540-6319 (JP)
(74) Representative: Grünecker, Kinkeldey, Stockmair & Schwanhäusser Anwaltssozietät
(86) International application number: PCT/JP2005/008772
(87) International publication number: WO 2005/111826

(57) **Abstract**

A communication system for allowing communications as of Internet and the like to be universally used without restricting a second user to use communication and further without requiring any significant capital investment. According to this communication system, when a terminal (104) becomes able to communicate with a network usage terminal (101) and is about to use the Internet via the network usage terminal (101), it transmits the authentication information of its user (B), and the network usage terminal (101) then transmits the authentication information of its owner (A) and the received authentication information of the user (B) to an authentication server (105). If a result of authentication is OK, the network usage terminal (101) relays the communication of the terminal (104) to the Internet (103), thereby permitting the terminal (104) to use the Internet.

## Description

### Technical Field

The present invention relates to a communication system, and more particularly, to a communication system that improves utilization efficiency of communication channels by mutually utilizing the communication channels for the Internet or the like among users of the communication.

### Background Art

In recent years, internet channels has shifted to broadband. For example, by introducing, for example, an optical fiber to a household, it is possible to realize a communication at 100 Mbps in all times. On the other hand, however, development of contents to promote the use of broadband is lagging behind. The band of 100 Mbps is not always used and a surplus is produced in channel bands. As a technology for using this surplus, for example, there is a technology of lending a band other than a band being used by a first user to a second user as described in Patent Document 1.
Patent Document 1: Japanese Patent Application Laid-Open No. 2004-23312

### Disclosure of Invention

### Problems to be Solved by the Invention

As explained in paragraph 0034, FIG.3, the technology shown in Patent Document 1 performs authentication of a second user and the authentication is performed by band management apparatus 32 in base station 3 of a service provider such as an Internet service provider (ISP) . Therefore, an ISP to which the first user subscribes and another ISP to which the second user subscribes need to be identical or have an alliance. For this reason, a channel being used by any first user cannot always be used by a second user, and this causes a problem that the use of a communication by the second user is limited.

Furthermore, with the widespread use of wireless LAN, wireless LAN is even available in public places such as a station. However, there is a problem that huge capital expenditure is necessary to further extend areas where wireless LAN is available.

It is therefore an object of the present invention to provide a communication system that allows communications such as the Internet to be available universally without restricting the use of communication by a second user or requiring huge capital expenditure.

### Means for Solving the Problem

In order to attain the above described object, the present invention connects a first network that is able to communicate with an authentication server with a network using terminal installed at, for example, each household by means of a channel so that a secondary terminal is able to communicate with the network using terminal using a second network, and when the secondary terminal attempts to use the first network through the network using terminal, the authentication server authenticates both the network using terminal and the secondary terminal.

In this way, by authenticating both the network using terminal and the secondary terminal, it is possible to clearly understand which channel band is used by which secondary terminal and thereby smoothly handle billing on the secondary terminal and add points such as benefits to the network using terminal providing the band of the channel. Furthermore, by allowing another secondary terminal to use the band of the channel of the network using terminal occupied by the secondary terminal user, it is possible to receive, for example, benefits, prevent the user from being one-sidedly billed, and promote the use of the network. Furthermore, by installing a network using terminal according to the present invention, on which wireless LAN is available, at each household, it is possible to extend areas where wireless LAN is available at low cost.

Furthermore, according to the present invention, when there is a service providing server which provides a service through the first network, it is also possible to perform authentication of the service providing server in addition to the authentication of the network using terminal and the secondary terminal.

This produces an effect of avoiding the secondary terminal from establishing connection with a server administrated by an ill-intentioned administrator, avoiding the existence of the network using terminal from being known to the administrator and being attacked by, for example, DoS (Denial of Service).

Furthermore, when the secondary terminal can further communicate with a tertiary terminal and the tertiary terminal attempts to use the first network, the authentication server may authenticate the network using terminal, secondary terminal and tertiary terminal. Likewise, the tertiary terminal may further communicate with a quaternary terminal, and the network using terminal, secondary terminal, tertiary terminal and quaternary terminal may be authenticated.

This allows the terminal to further extend the area where the first network is available.

### Advantageous Effect of the Invention

According to the communication system or the like according to the present invention, it is possible to promote the use of a surplus band of a channel and also smoothly perform, for example, billing management on a person who provides the band of the channel and a person who uses the channel.

### Brief Description of Drawings

FIG.1 is a schematic view of the present invention;
FIG.2 is a sequence diagram showing an overview of the present invention;
FIG.3 exemplifies processing of management such as billing;
FIG.4 is a sequence diagram illustrating an authentication steps;
FIG.5 shows the overall configuration of a communication system according to Embodiment 1 of the present invention;
FIG.6 is a functional block diagram of a secondary terminal;
FIG.7 is a flow chart of processing of the secondary terminal;
FIG.8 is a functional block diagram of a network using terminal;
FIG.9 is a flow chart of processing of the network using terminal;
FIG.10 is a functional block diagram of an authentication server;
FIG.11 is a flow chart of processing of the authentication server;
FIG.12 is a sequence diagram of processing of the whole communication system;
FIG.13 is a view illustrating processing for obtaining consensus of a condition of usage;
FIG.14 shows the overall configuration of a communication system according to Embodiment 2 of the present invention;
FIG.15 is a functional block diagram of a secondary terminal;
FIG.16 shows the overall configuration of a communication system according to Embodiment 3 of the present invention;
FIG.17 is a functional block diagram of a tertiary terminal;
FIG.18 is a functional block diagram of a secondary terminal;
FIG. 19 is a flow chart of processing of the secondary terminal; and
FIG.20 is a view of the configuration of a developed mode of Embodiment 3 of the present invention.

### Best Mode for Carrying Out the Invention

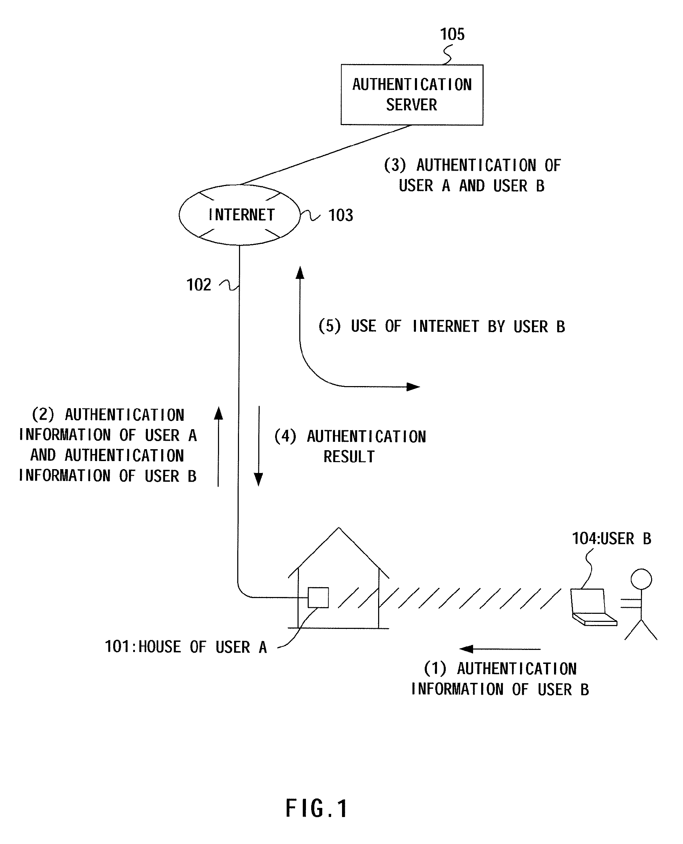

FIG.1 exemplifies an overview of the present invention. Network using terminal 101 is installed in a house of user A and is connected to internet 103 by channel 102. Network using terminal 101 is, for example, a router, and more preferably, a router having a wireless LAN function. Furthermore, network using terminal 101 need not be directly connected to channel 102 and may also be a radio access point connected to channel 102 through a media converter, splitter, or other network device (e.g., router and hub and so on). Channel 102 is, physically, a metal channel of a telephone line or an optical channel using an optical fiber. In the case of a telephone line, broadband communication such as ADSL is preferably available in all times.

Suppose that network using terminal 101 is having a wireless LAN function. If, pursuant to, for example, the IEEE802 . 11 standard, a communication of tens of meters is possible, and therefore a communication between terminal 104 having a radio function for user B who is near the house of user A and network using terminal 101 may be possible. A password (which is referred to, for example, as a "WEP key") is normally set in network using terminal 101 and only specific terminals is able to communicate with network using terminal 101. In the present invention, however, when terminal 104 exists in an area where a communication with network using terminal 101 is possible, a link is established between terminal 104 and network using terminal 101 and a communication is made possible. In this condition, network using terminal 101 performs control such that terminal 104 is not allowed to use internet 103 through channel 102.

When terminal 104 needs to use internet 103, (1) terminal 104 first transmits authentication information of user B (or terminal 104) to network using terminal 101. Next, (2) network using terminal 101 transmits both authentication information of user A (or the network using terminal) and the authentication information of user B (or terminal 104) to authentication server 105 through channel 102 and internet 103. Then, (3) authentication server 105 authenticates user A and user B and replies the authentication result to network using terminal 101. If the authentication is OK, (4) internet using terminal 101 permits terminal 104 to use internet 103 through channel 102. As described in parentheses, the authentication information of user B will be used to mean the authentication information of terminal 104 and the authentication information of user A will be used to mean the authentication information of network using terminal 101 hereinafter.

FIG . 2 shows the above described events in the form of a sequence diagram. In step S201, a connection is established between network using terminal 101 of user A and an ISP of user A, and at least network using terminal 101 is allowed to use internet 103 through channel 102.

In step S202, when terminal 104 of user B enters an area where communication with network using terminal 101 is possible, a radio link is established between terminal 104 and network using terminal 101. However, suppose that terminal 104 cannot use internet 103 through network using terminal 101 by only establishing a radio link. Here, if terminal 104 needs to use internet 103, in step S203, the authentication information of user B is transmitted from terminal 104 to network using terminal 101. When network using terminal 101 receives the authentication information of user B, the authentication information of user A and the received authentication information of user B are transmitted to authentication server 105 from network using terminal 101 in step S204. When user A and user B are authenticated by authentication server 105, management such as billing is performed as step S205.

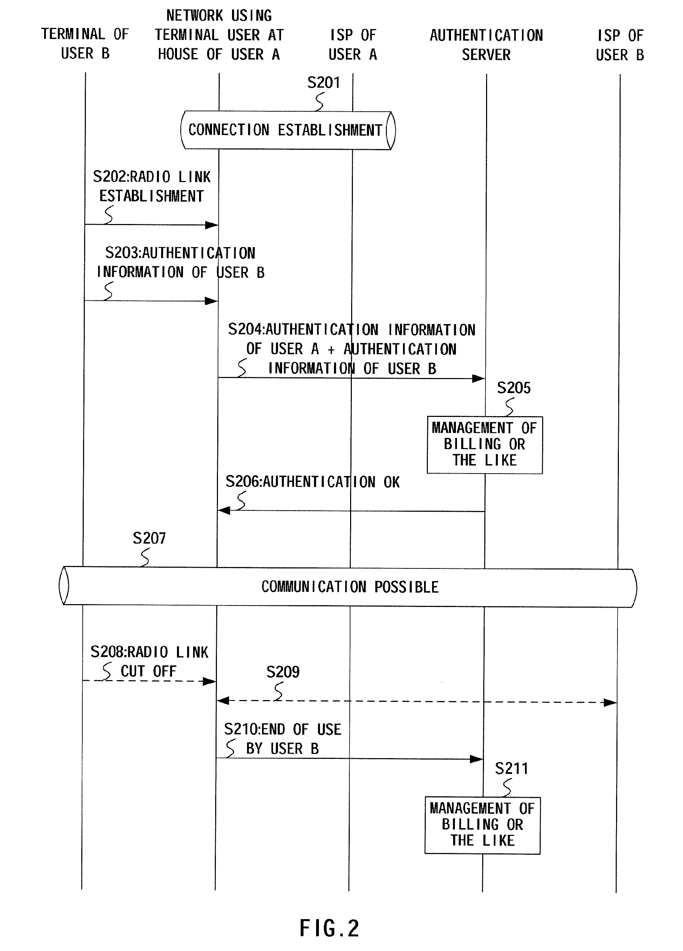

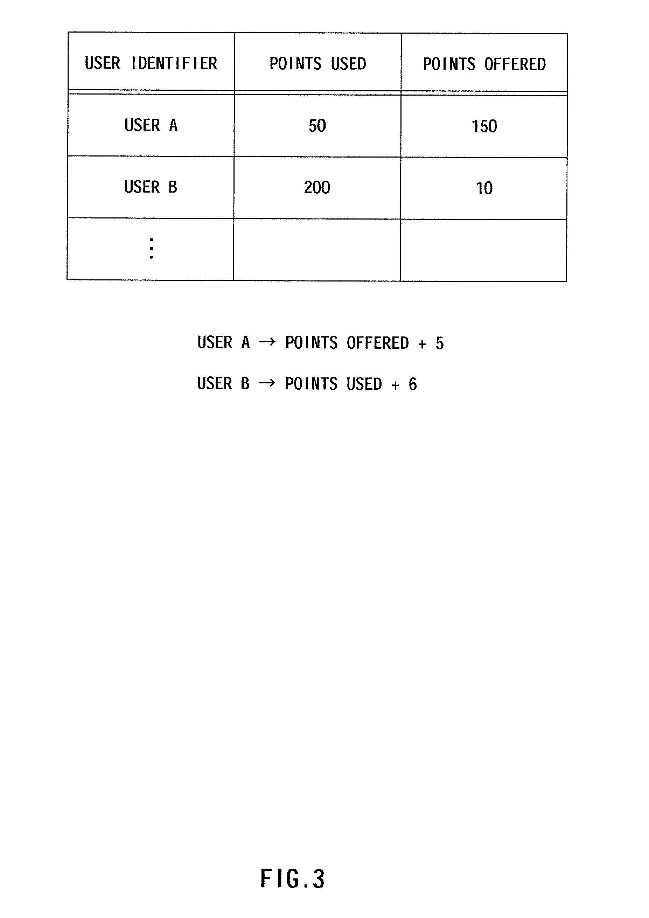

FIG.3 exemplifies management such as billing. There are columns named "user identifier", "points used" and "points offered" in authentication server 105, and respectively storing information for identifying a user; points indicating that the band of the channel is used; and points indicating that a third party is allowed to use the band of the channel. In the cases of FIG.1 and FIG.2, user B uses the band of the channel of user A, and therefore, for example, 5 points are added to user A as the points offered and 6 points are added to user B as the points used. The difference between 6 points and 5 points represents, for example, a profit of a management company of the authentication server.

As a result of authenticating user A and user B, the network using terminal is informed in step S206 that the authentication is OK, and in step S207, network using terminal 101 relays the communication by terminal 104 to internet 103 through channel 102. This allows terminal 104 and the ISP of user B to communicate with each other. For example, a communication between terminal 104 and the server of the ISP of user B using a VPN (Virtual Private Network) or the like becomes possible (for example, a communication path with a mail server and a proxy server of the ISP of user B using a VPN is established).

After that, when the radio link between terminal 104 and network using terminal 101 is cut off in step S208, the communication with the ISP of user B is cut off in step S209. Then, a state of use of channel 102 by terminal 104 including, for example, duration that channel 102 is used, the number of packets of the communication through channel 102, and the width of the band used are transmitted to the authentication server in step S210 and management such as billing is performed in step S211.

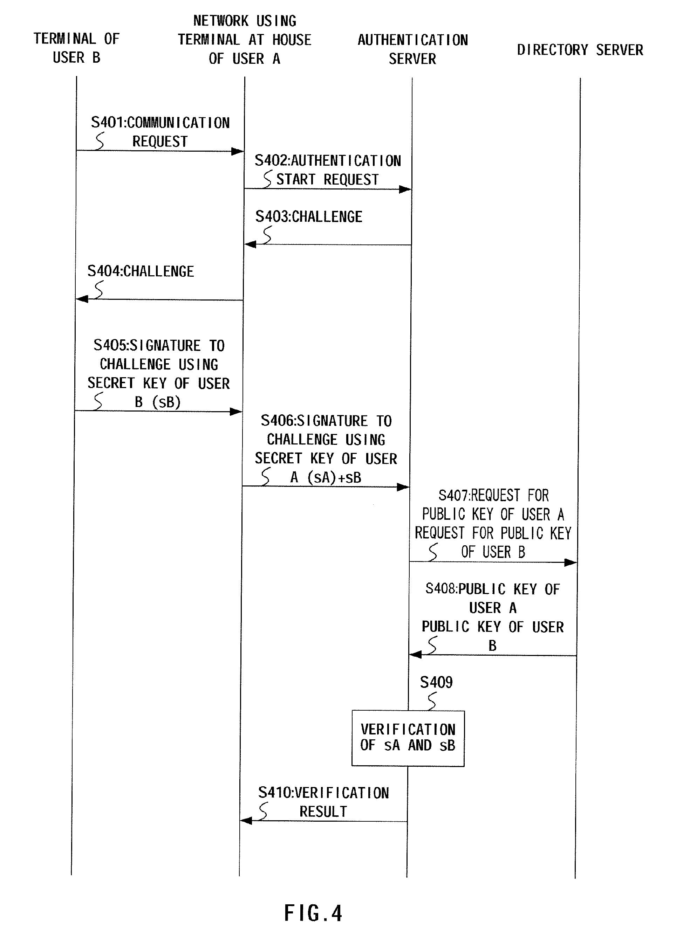

FIG.4 exemplifies a sequence diagram which explains steps of authentication of user B and user A in further detail. This sequence diagram assumes the use of public key encryption, user B and user A each have a secret key and public key, and suppose each public key (or public key certificate) is registered, for example, in a directory server. The directory server may be the same as or different from authentication server 105.

In step S401, terminal 104 of user B transmits a request for a communication through channel 102 to network using terminal 101 in the house of user A. Then, in step S402, network using terminal 101 transmits information requesting start of authentication to the authentication server, and in step S403, the authentication server generates, for example, random numbers and transmits the random numbers to network using terminal 101 as a challenge. In step S404, network using terminal 101 transmits the challenge to terminal 104. Terminal 104 gives a signature to the challenge using the secret key of user B (this is referred to as "sB") and transmits this to network using terminal 101 in step S405. Network using terminal 101 which has received sB gives a signature on the challenge using the secret key of user A (this is referred to as "sA") and transmits sA and sB to authentication server 105 in step S406. Authentication server 105 requests the public keys of user A and user B for the directory server in step S407 and receives replies of user A and user B in step S408. Then, in step S409, sA and sB are verified, that is, sA and sB are decoded using their public keys and verified whether or not the challenge transmitted in step S403 can be obtained. In step S410, authentication server 105 transmits the result of the verification to network using terminal 101.

In the above explanation, network using terminal 101 has been described as being connected to the Internet through channel 102, but this is not limited to the Internet, and a general communication network may also be used. Furthermore, network using terminal 101 and terminal 104 are assumed to communicate using the wireless LAN, but communication may also be performed using a cable or infrared rays. Furthermore, prior to step S402, the network using terminal may authenticate the authentication server using, for example, a public key certificate of the authentication server.

Hereinafter, the best mode for implementing the present invention will be divided into embodiments and explained using the attached drawings. The present invention is by no means limited to these embodiments and may be implemented in various modes within a range not departing from the essence thereof.

### (Embodiment 1)

### (Embodiment 1: Overall configuration)

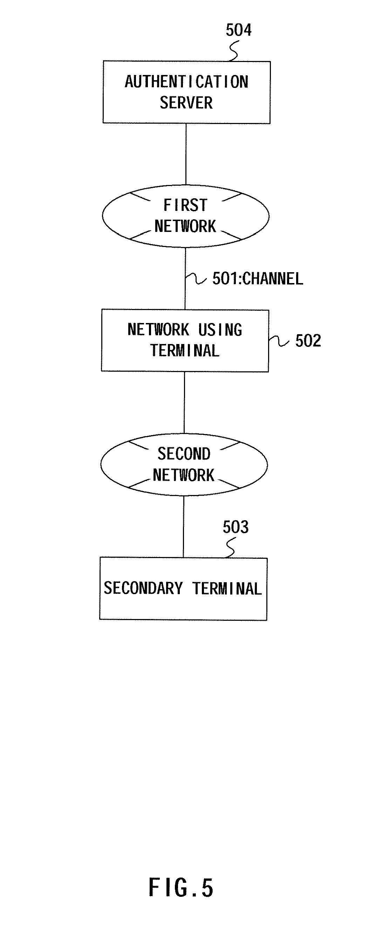

FIG.5 exemplifies the overall configuration of a communication system according to Embodiment 1 of the present invention. The communication system according to this embodiment is configured with channel 501, network using terminal 502, secondary terminal 503 and authentication server 504. Network using terminal 502 uses a first network. Furthermore, secondary terminal 503 is able to communicate with network using terminal 502 using a second network.

As an example of the first network, there is a wide area communication network represented by, for example, the Internet but the first network is not limited to that. Furthermore, as an example of the second network, there is a communication network which is formed with wireless LAN but the second network is not limited to this. The first network and the second network may be the same. Furthermore, the figure illustrates that authentication server 504 is connected to the first network but the configuration by no means limited to this, for example, authentication server 504 may also be allowed to directly communicate with network using terminal 502.

FIG.5 illustrates only one secondary terminal but there may also exist a plurality of secondary terminals.

### (Embodiment 1: Configuration of channel)

Channel 501 connects network using terminal 502 to the first network. As an example of the channel, there is an optical channel using an optical fiber.

### (Embodiment 1: Configuration of secondary terminal)

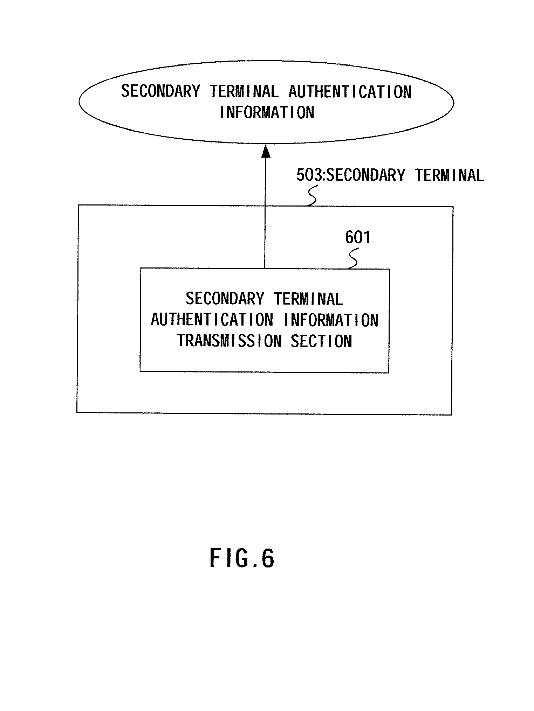

FIG.6 exemplifies a functional block diagram of the secondary terminal. Secondary terminal 503 has secondary terminal authentication information transmission section 601.

"Secondary terminal authentication information transmission section" 601 transmits secondary terminal authentication information to network using terminal 502 using the second network. Here, the "secondary terminal authentication information" is information including information for authenticating the subject. "The subject" represents the secondary terminal. Therefore, the secondary terminal authentication information includes, for example, an identifier for identifying the secondary terminal and a password. Alternatively, an identifier for recognizing the secondary terminal and a result of giving a signature on predetermined data using a secret key of the secondary terminal are also possible.

Secondary terminal authentication information transmission section 601 of the secondary terminal according to this embodiment can be configured with one of hardware and software, or both of hardware and software (program). For example, when a computer is used as an example for realizing these, hardware configured with, for example, a CPU, memory, bus, interface and peripheral devices, and software executable on this hardware are included. Therefore, though not illustrated, the secondary terminal has, for example, a network interface to communicate with the second network. Furthermore, if the secondary terminal is for operated by an owner, a user interface is also provided.

### (Embodiment 1: Processing of secondary terminal)

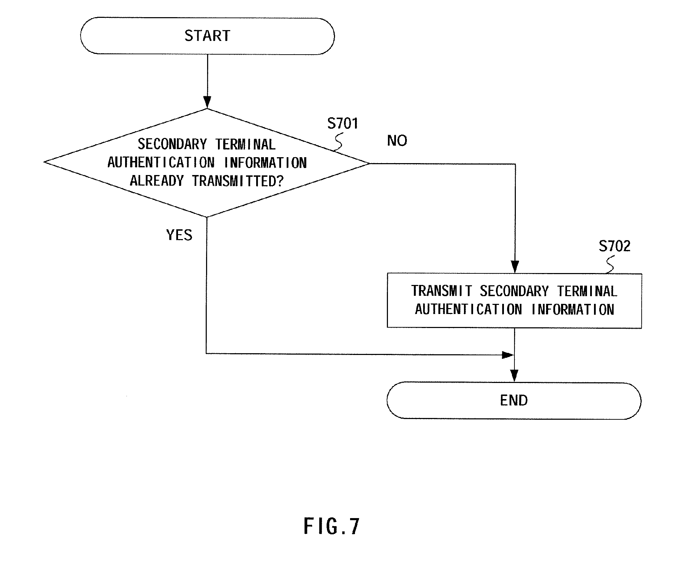

FIG.7 exemplifies a flow chart of processing by the secondary terminal. The secondary terminal performs the processing of this flow chart when, for example, carrying out a communication using the first network.

First, it is determined in step S701 whether or not the secondary terminal authentication information has already been transmitted. This determination can be made, for example, by providing a flag inside the secondary terminal and checking the value of the flag. If the secondary terminal authentication information has already been transmitted, a communication using the first network is carried out without doing anything. If the secondary terminal authentication information has not been transmitted yet, the process moves to step S702 and the secondary terminal authentication information is transmitted. If the above described flag is provided, the value of the flag is assumed to indicate "transmitted."

### (Embodiment 1: Network using terminal)

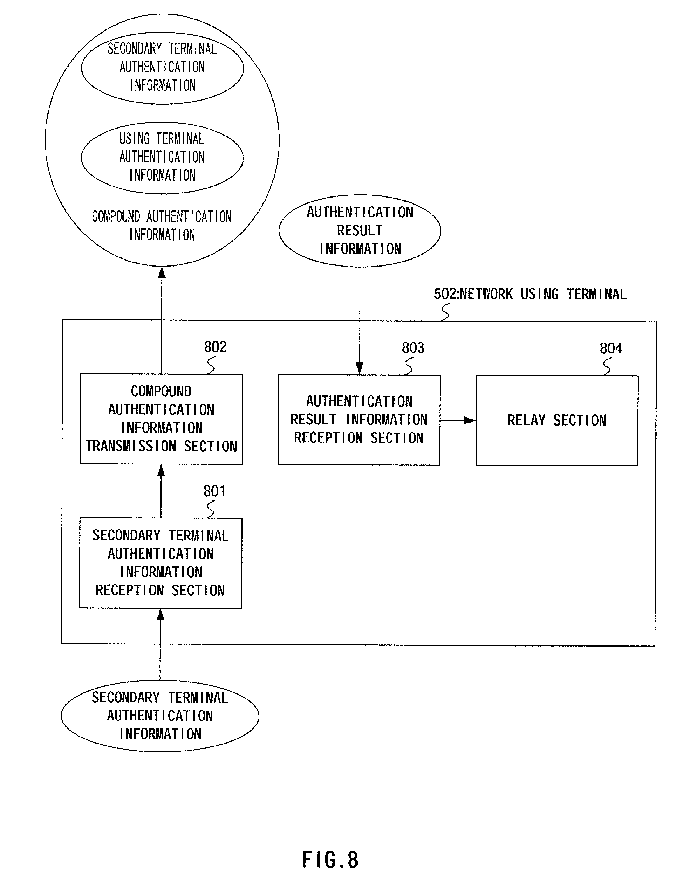

FIG.8 exemplifies a functional block diagram of the network using terminal. Network using terminal 502 has secondary terminal authentication information reception section 801, compound authentication information transmission section 802, authentication result information reception section 803 and relay section 804.

"Secondary terminal authentication information reception section" 801 receives the secondary terminal authentication information transmitted from secondary terminal 503. That is, it receives the secondary terminal authentication information through the second network.

"Compound authentication information transmission section" 802 transmits compound authentication information received at secondary terminal authentication information reception section 801. The "compound authentication information" refers to information including the secondary terminal authentication information received at secondary terminal authentication information reception section 801 and the using terminal authentication information. The "using terminal authentication information" refers to information for authenticating the subject and "the subject" represents network using terminal 502. As examples of the using terminal authentication information, there are an identifier for identifying network using terminal 502 and a password. Alternatively, the identifier for identifying network using terminal 502 and a result of giving a signature on predetermined data using a secret key of an owner of network using terminal 502 are also included. As will be clear from the explanations below, the compound authentication information is the information which is transmitted to authentication server 504. Therefore, the compound authentication information is transmitted to a network to which authentication server 504 is connected.

"Authentication result information reception section" 803 receives authentication result information. The "authentication result information" is the information replied according to the transmission of the compound authentication information and is the information which indicates the result of the authentication based on the compound authentication information. That is, it is the information including the result of the authentication according to the secondary terminal authentication information and the result of authentication according to the using terminal authentication information. As will be clear from the explanations below, the authentication result information is transmitted from authentication server 504. Therefore, the authentication result information is received from the network to which authentication server 504 is connected.

"Relay section" 804 relays communication of secondary terminal 503 to the first network based on the authentication result information received at authentication result information reception section 803 and thereby permits secondary terminal 503 to use the first network. "Based on the authentication result information" means that certain causality exists between the content indicated by the authentication result information and the permission. Permission is given when, for example, according to the authentication result information, secondary terminal 503 is authenticated with the secondary terminal authentication information and network using terminal 502 is authenticated with the using terminal authentication information. "Giving permission" refers to relaying such that when a packet transmitted from secondary terminal 503 is directed to the first network as the destination, the packet is transmitted to the first network through channel 501 and when a packet received from the first network is directed to secondary terminal 503 as the destination, the packet is transmitted to secondary terminal 503 through the second network.

The sections of the network using terminal according to this embodiment can be configured with one of hardware and software, or both of hardware and software (program). For example, when a computer is used as an example for realizing these, hardware configured with, for example, a CPU, memory, bus, interface and peripheral devices, and software executable on this hardware are included. Therefore, though not illustrated, network using terminal 502 is provided with a network interface to communicate with, for example, the first network and the second network.

### (Embodiment 1: Processing of network using terminal)

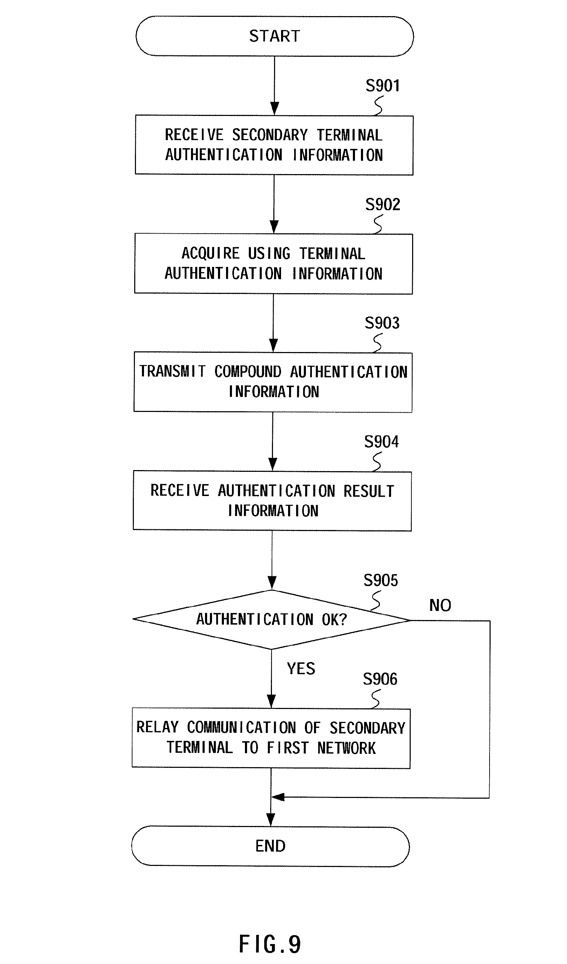

FIG.9 exemplifies a flow chart of processing the network using terminal performs. The network using terminal performs the processing of this flow chart, for example, every time it receives secondary terminal authentication information from the secondary terminal. In step S901, secondary terminal authentication information reception section 801 receives secondary terminal authentication information. In step S902, using terminal authentication information is obtained. If the using terminal authentication information is comprised of an identifier and a password, the password stored in, for example, a memory is read. When, for example, giving a signature, a secret key is read and a signature is generated. In this sense, the present specification assumes that the concept of acquisition covers the concept of generation, too. Furthermore, step S902 is executed by compound authentication information transmission section 802. In step S903, compound authentication information is transmitted from compound authentication information transmission section 802. In step S904, authentication result information is received by authentication result information reception section 803. In step S905, it is determined whether or not authentication is OK, that is, whether or not secondary terminal 503 and network using terminal 502 have been authenticated. This determination is made, for example, at relay section 804. If the authentication is OK, relay section 804 relays the communication of the secondary terminal to the first network. That is, exchanging packets between the first network and the secondary terminal is made possible.

### (Embodiment 1: Configuration of authentication server)

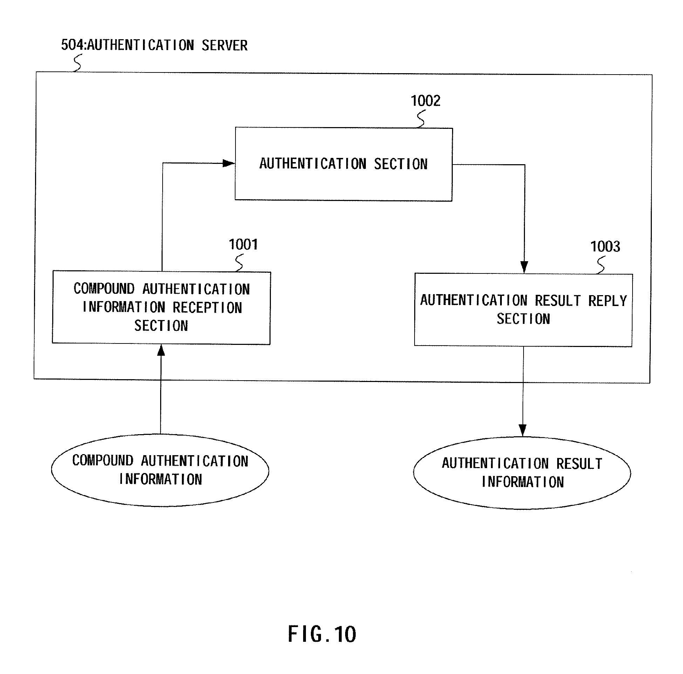

FIG.10 exemplifies a functional block diagram of the authentication server. Authentication server 504 has compound authentication information reception section 1001, authentication section 1002 and authentication result reply section 1003.

"Compound authentication information reception section" 1001 receives the compound authentication information transmitted from network using terminal 502.

"Authentication section" 1002 authenticates secondary terminal 503 and network using terminal 502 based on the compound authentication information received at compound authentication information reception section 1001. For example, a table storing terminal identifiers and passwords is provided in the authentication server to determine whether or not the identifier and the password of the secondary terminal included in the compound authentication information reception section, and the identifier and the password of the network using terminal match identifiers and the passwords stored in the table. Alternatively, if a signature corresponding to predetermined data is included in the compound authentication information, whether or not the signature is authentic is determined.

As for the authentication at the authentication section, the secondary terminal and the network using terminal may be authenticated separately. Alternatively, authentication may be performed on condition that the secondary terminal and the network using terminal have a specific combination.

"Authentication result reply section" 1003 replies the result of the authentication at authentication section 1002 as the authentication result information.

Each section of the authentication server according to this embodiment can be configured with one of hardware and software, or both of hardware and software (program). For example, when a computer is used as an example for realizing these, hardware configured with, for example, a CPU, memory, bus, interface and peripheral devices and software executable on this hardware are included. Therefore, though not illustrated, the authentication server is provided with, for example, a network interface to communicate with the network using terminal or, if necessary, directory server to obtain, for example, a public key.

### (Embodiment 1: Processing of authentication server)

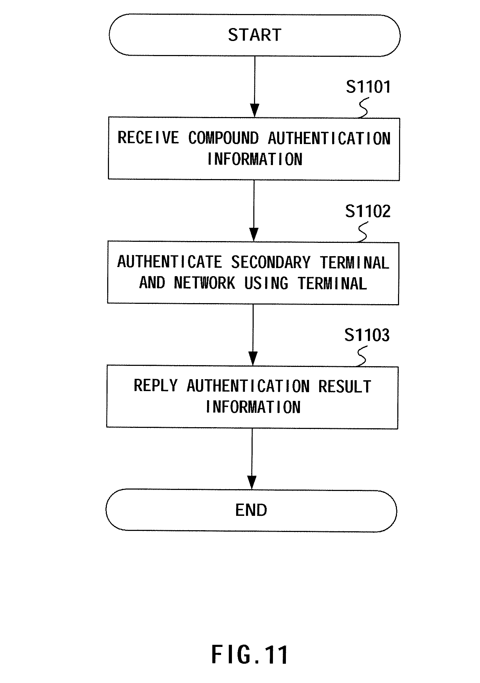

FIG.11 shows a flow chart exemplifying processing of the authentication server. Every time the authentication server receives compound authentication information, it executes the processing of the flow chart in FIG.11. In step S1101, compound authentication information is received by the compound authentication information reception section. In step S1002, the secondary terminal and the network using terminal are authenticated by the authentication section. In step S1003, the authentication result information is replied by the authentication result reply section.

### (Embodiment 1: Overall processing)

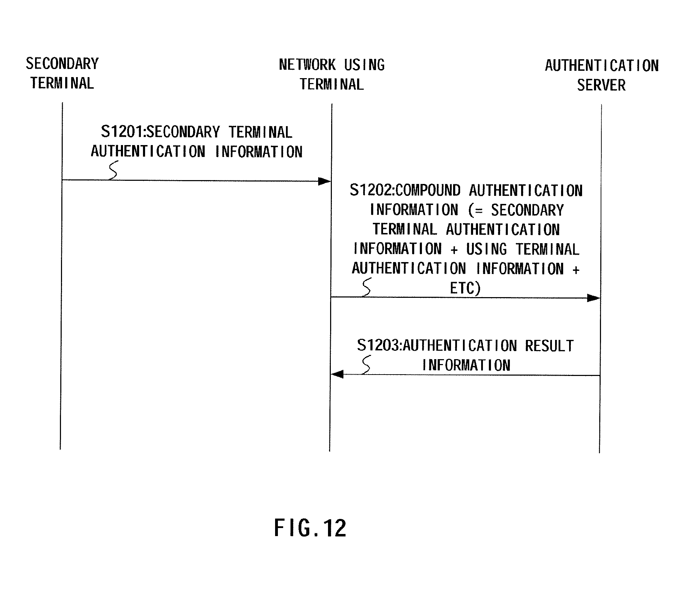

FIG.12 exemplifies a sequence diagram of the whole processing of the communication system according to this embodiment.
In step S1201, secondary terminal authentication information is transmitted from the secondary terminal to the network using terminal. In step S1202, compound authentication information, that is, information including secondary terminal authentication information and using terminal authentication information is transmitted from the network using terminal to the authentication server. In step S1203, the authentication result information is transmitted from the authentication server to the network using terminal. After that, the use of the first network by the secondary terminal is permitted based on the authentication result information.

### (Embodiment 1: Other modes)

A minimum configuration and processing according to Embodiment 1 of the present invention are explained above. In addition to these, if, for example, the secondary terminal and the network using terminal are authenticated by the authentication server based on the compound authentication information, the authentication server may perform management such as billing. The management such as billing may also be performed by a server other than the authentication server. Furthermore, when a communication between the secondary terminal and the network using terminal is cut off, it is also possible for the network using terminal to transmit, for example, the information indicating the amount of use of the first network by the secondary terminal to, for example, the authentication server and perform management such as billing.

The network using terminal may make a false request regarding, for example, the amount of use of the first network to, for example, the authentication server. As a measure against this, for example, the network using terminal may have an amount of communication reporting section which regularly reports an amount of communication information indicating an amount of use of the first network (including, for example, utilization time, bandwidth used, amount of packet traffic) to the secondary terminal. By this means, there is a solution such that the amount of communication information recorded from the secondary terminal to the authentication server and the amount of communication information transmitted from the communication fee reporting section of the network using terminal can be compared. Alternatively, immediately before the secondary terminal cuts off a communication with the network using terminal, the secondary terminal may transmit the amount of communication information obtained, for example, through measurement by the secondary terminal or transmitted from the network using terminal to the authentication server. For example, the authentication server compares the amount of communication information transmitted from the secondary terminal with the amount of communication information transmitted from the network using terminal, and if the difference between the two amounts of communication information is unacceptable, information indicating the network using terminal and the secondary terminal that should be audited may be displayed to, for example, the administrator.

Furthermore, the network using terminal may present a condition of use of, for example, channel 501 to the secondary terminal and conduct negotiations with the secondary terminal about the condition of usage. The condition of usage may include, for example, the band of channel 501 the secondary terminal uses or duration of use of channel 501.

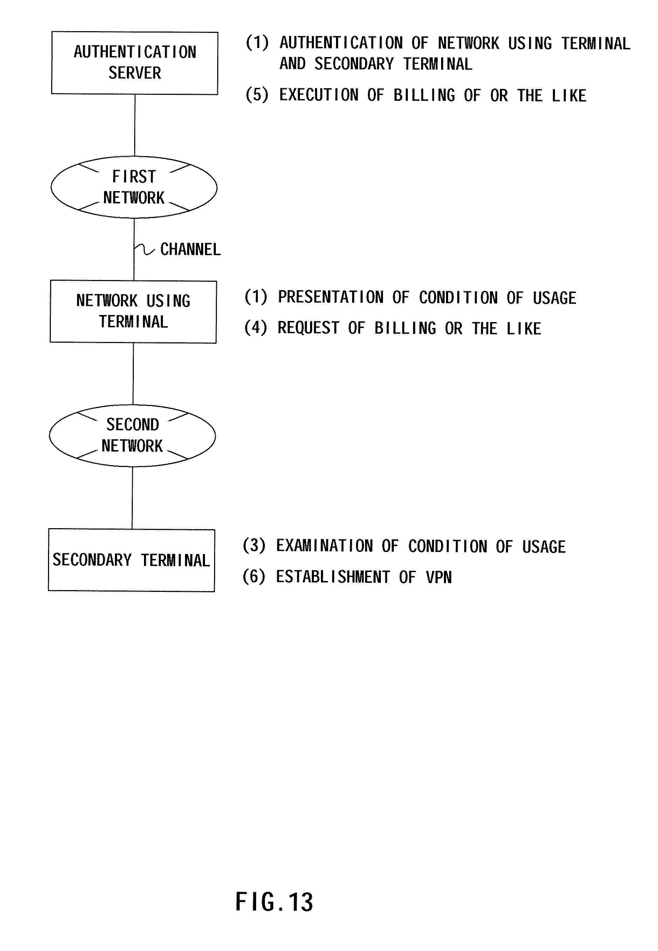

FIG.13 exemplifies processing of conducting a negotiation about the condition of usage.
First, (1) the authentication server authenticates the network using terminal and the secondary terminal. Next, (2) the condition of usage is presented from the network using terminal to the secondary terminal. (3) The condition of usage is examined by the secondary terminal. For example, it is determined whether or not the condition of usagemeets the purpose of use of the secondary terminal. If the result of the examination is OK, the result is transmitted to the network using terminal and (4) a request such as billing is made from the network using terminal to the authentication server and the billing server. If the authentication server also performs processing of billing, (5) the authentication server performs, for example, billing. The secondary terminal can use the first network. Though not indispensable to the present invention, (6) the secondary terminal establishes a safe communication path between a VPN and a specific host and performs a communication.

In FIG.13, the condition of usage is presented after the authentication by the authentication server, but the condition of usage may be presented when the secondary terminal authentication information is transmitted. Furthermore, if the owner of the network using terminal needs to use channel 501 when the secondary terminal is permitted to use the first network, the network terminal and the secondary terminal conduct a negotiation about whether or not the band of channel 501 used by the secondary terminal may be restricted and if the negotiation is performed, the network using terminal restricts the band of channel 501 used by the secondary terminal. Alternatively, a negotiation may also be conducted even when a plurality of secondary terminals exist, the number of secondary terminals increases and the network using terminal cannot guarantee the band to be provided for the respective secondary terminals. Furthermore, the network using terminal may also make a request to change, for example, the billing rate according to the result of the negotiation.

Furthermore, when a new band is necessary at the secondary terminal, the secondary terminal side may also conduct a negotiation with the network using terminal.

Furthermore, there may be various objects of the negotiation. For example, a ratio of the band available to the network using terminal in a band or a ratio in the remaining amount after subtracting the portion used by the owner of the network using terminal may be the objects of the negotiation. By this means, it is possible to reduce the number of times negotiation needs to be conducted again when the state of communication is changed and reduce overhead produced in conducting negotiation.

Furthermore, it is also possible to negotiate conditions of billing and quality per content of communication (for example, in a case of a TCP/IP communication, a service determined based on a port number used for a communication). For example, a large band may be assigned for video data with high priority, and a high billing rate may be imposed accordingly.

These are for what content negotiation is conducted, and no restrictions are imposed on the function of conducting negotiation at all.

Furthermore, for example, in an urban area, the secondary terminal may be able to communicate with a plurality of network using terminals simultaneously, and the secondary terminal may select a network using terminal so as to use a network using terminal which presents the most favorable condition of usage.

### (Embodiment 1: Main effects)

According to this embodiment, it is possible to promote the use of surplus bands of channel 501 and carry out authentication using compound authentication information, thereby smoothly conducting billing management on a person who provides a band of channel 501 and a person who uses it. Furthermore, authentication using compound authentication information is performed, so that it is unnecessary that the ISP used by the network using terminal is identical to or have an alliance with the ISP the owner of the secondary terminal subscribes to, and the ISP used by the network using terminal only has to be registered in an authentication server which can be installed apart from the ISP the owner of the secondary terminal subscribes to.

### (Embodiment 2)

### (Embodiment 2: Overall configuration)

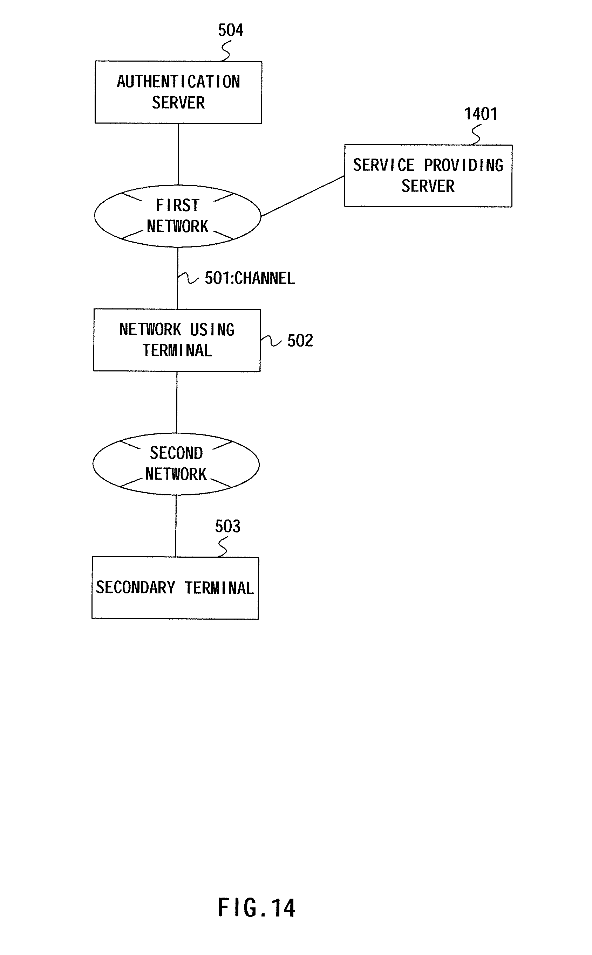

FIG.14 exemplifies the overall configuration of a communication system according to Embodiment 2 of the present invention. The communication system according to this embodiment is configured with channel 501, network using terminal 502, secondary terminal 503, authentication server 504 and service providing server 1401. Therefore, the communication system according to this embodiment is a configuration where service providing server 1401 is added to the configuration of the communication system according to Embodiment 1.

Service providing server 1401 is a server which provides a service through the first network.

### (Embodiment 2: Structure of secondary terminal authentication information)

In this embodiment, the secondary terminal authentication information secondary terminal authentication information transmission section 601 of secondary terminal 503 transmits includes service providing server identification information. The "service providing server identification information" is information to identify the service providing server with which the secondary terminal communicates using the first network. For example, the information includes, for example, the IP address and FQDN (Full Qualified Domain Name) of the service providing server.

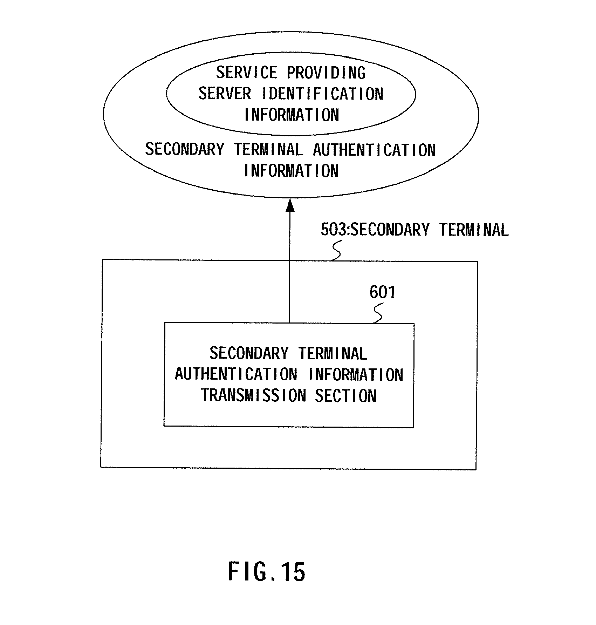

FIG.15 exemplifies that the service providing server identification information is included in the secondary terminal authentication information the secondary terminal transmits.

### (Embodiment 2: Processing at relay section)

In this embodiment, the relay section of the network using terminal relays communication of the secondary terminal to the service providing server through the first network based on the authentication result received at the authentication result information reception section, thereby permitting the secondary terminal to use the first network. For example, if a packet from the secondary terminal is directed to the service providing server as a destination, the packet is transmitted to channel 501 and, otherwise, the packet is discarded. On the other hand, when the packet received from the first network is directed to the secondary terminal as a destination, that packet is discarded unless the sender is not the service providing server.

### (Embodiment 2: Processing at authentication section)

In this embodiment, the authentication section of the authentication server authenticates the service providing server based on the compound authentication information received at the compound authentication information reception section. The purpose of this authentication of the service providing server is to authenticate a communication between the service providing server and the secondary terminal. That is, according to this embodiment, on the premise that the service providing server has to be authenticated, communication between the service providing server and the secondary terminal is possible. As a method of authenticating the service providing server, there is a method of authenticating the service providing server based on the service providing server identification information included in the secondary terminal authentication information. For example, the authentication server transmits a challenge as a random to the service providing server number based on the service providing server identification information, and the service providing server encrypts the received challenge using the own secret key and sends a reply (response). The authentication server which has received the reply acquires the public key of the service providing server, decodes the reply and determines whether or not the original challenge can be obtained. Whether or not, for example, the service providing server identification information exists in a list which collects identifiers of harmful servers or exists in a list which collects identifiers of excellent servers may be confirmed before or after the authentication by such a challenge-response.

The authentication server authenticates the service providing server in this way, thereby identifying the service providing server with which the secondary terminal is able to communicate in the communication system according to this embodiment. By this means, it is possible to, for example, collect the service fee. Furthermore, if the administrator of the service providing server is, for example, ill-intentioned, when the secondary terminal uses the service providing server via the network using terminal, the existence of the network using terminal may be found by, for example, the ill- intentioned administrator and the system may become a target of, for example, DoS attack, but it is possible to avoid DoS attack by preventing such a service providing server from being authenticated.

Furthermore, whether or not the combination of the secondary terminal and the service providing server is appropriate may be determined after the authentication of the service providing server. For example, the secondary terminal identifier in a table and the service providing server identification information for identifying service providing servers available to that secondary terminal may be associated with each other and are stored in the table. Carrying out authentication using such a table prevents the secondary terminal from using any server other than a predetermined service providing server. For example, it is possible to limit an access by the owner of the secondary terminal who is out while on duty, to only the server in the workplace.

Alternatively, the network using terminal identifier in a table and the service providing server identification information for identifying service providing servers available to that secondary terminal may be associated with each other and are stored in the table. By carrying out authentication using such a table, it is possible to provide a service available only when the user is around a predetermined network using terminal, and it is useful in attracting people to, for example, a shopping district and resort.

### (Embodiment 2: Main effects)

As described above, according to this embodiment, it is possible to specify the service providing server which the secondary terminal is able to communicate with, thereby collecting the service fee.

### (Embodiment 3)

### (Embodiment 3: Overall configuration)

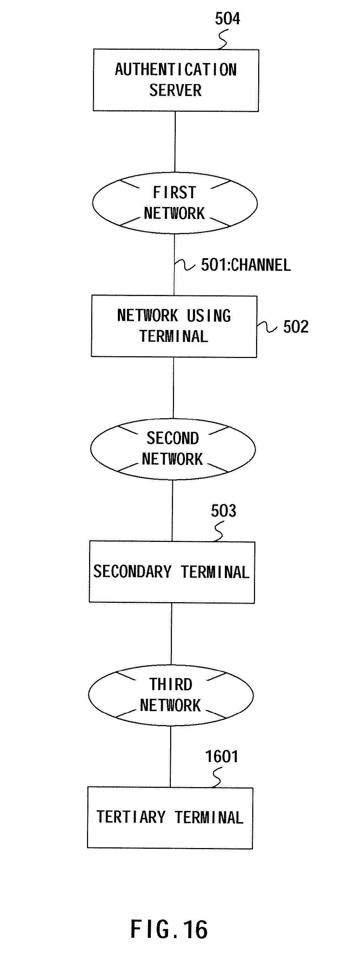

FIG.16 exemplifies the overall configuration of a communication system according to Embodiment 3 of the present invention. The communication system according to this embodiment is configured with channel 501, network using terminal 502, secondary terminal 503, authentication server 504 and tertiary terminal 1601. Furthermore, there may also be a service providing server. Therefore, the communication system according to this embodiment has a configuration where tertiary terminal 1601 is provided to the configuration of the communication system according to Embodiment 1 or 2.

### (Embodiment 3: Configuration of tertiary terminal)

Tertiary terminal 1601 is a terminal that is able to communicate with secondary terminal 503 using a third network. The "third network" is a communication network formed with, for example, wireless LAN.

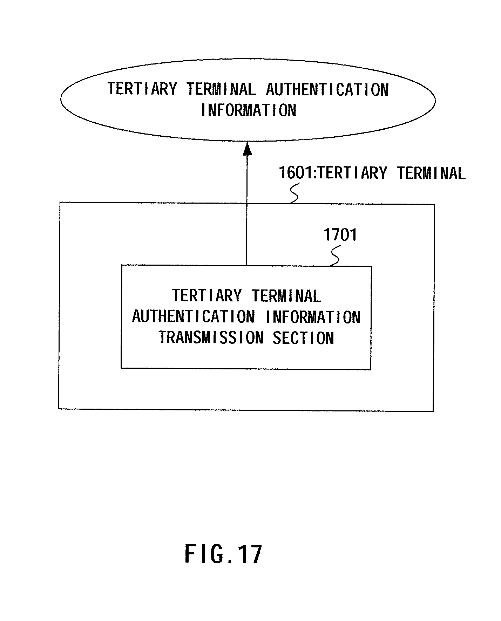

FIG.17 exemplifies a functional block diagram of the tertiary terminal. Tertiary terminal 1601 has tertiary terminal authentication information transmission section 1701.

"Tertiary terminal authentication information transmission section" 1701 transmits tertiary terminal authentication information to secondary terminal 503 using the third network. Here, the "tertiary terminal authentication information" is information for authenticating the subject, and "the subject" means the tertiary terminal. Therefore, the tertiary terminal authentication information may have, for example, the same structure as the secondary terminal authentication information of Embodiment 1.

The section of the tertiary terminal according to this embodiment can be configured with hardware, software, or both of hardware and software (program). For example, when a computer is used as an example for realizing these, hardware configured with, for example, a CPU, memory, bus, interface and peripheral devices and software executable on this hardware are included. Therefore, though not illustrated, the tertiary terminal is provided with a network interface or the like to communicate with the third network. Furthermore, if the tertiary terminal is operated by the owner, for example, a user interface is also provided.

### (Embodiment 3: Configuration of secondary terminal)

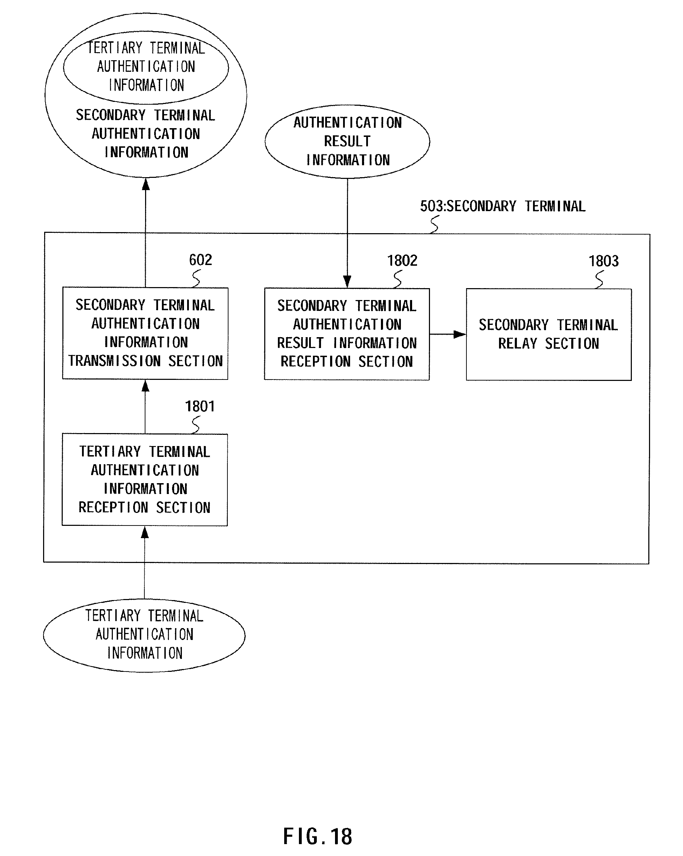

FIG.18 exemplifies a functional block diagram of the secondary terminal of the communication system according to this embodiment. In this embodiment, secondary terminal 503 has tertiary terminal authentication information reception section 1801, secondary terminal authentication information transmission section 601, secondary terminal authentication result information reception section 1802 and secondary terminal relay section 1803.

"Tertiary terminal authentication information reception section" 1801 receives the tertiary terminal authentication information transmitted from tertiary terminal 1601. Therefore, the secondary terminal according to this embodiment is provided with the network interface so that the secondary terminal according to Embodiment 1 or 2 communicates with the third network.

"Secondary terminal authentication information transmission section" 601 is same as Embodiment 1 or 2, but in this embodiment, it includes the tertiary terminal authentication information received at the tertiary terminal authentication information reception section in the secondary terminal authentication information and transmits the result.

"Secondary terminal authentication result information reception section" 1802 receives the authentication result information replied in response to the transmission of the secondary terminal authentication information. The authentication result information is received through network using terminal (explained later).

"Secondary terminal relay section" 1803 relays communication of tertiary terminal 1601 to the second network based on the authentication result information received at secondary terminal authentication result information reception section 1802 and thereby permits the tertiary terminal 1601 to use the first network. If the authentication result information indicates that the authentication is OK, the communication of secondary terminal 503 is relayed to the first network, and the secondary terminal relays the communication of the tertiary terminal to the second network, so that the tertiary terminal is able to communicate with the first network.

### (Embodiment 3: Configuration of network using terminal)

In this embodiment, network using terminal 502 further has an authentication result transmission section.

The "authentication result transmission section" transmits the authentication result information received at authentication result information reception section 803 to secondary terminal 503.

### (Embodiment 3: Configuration of authentication server)

In this embodiment, authentication section 1002 of authentication server 504 further authenticates tertiary terminal 1601 based on the compound authentication information received at compound authentication information reception section 1001. The method of authentication may be the same as the method of authentication of the secondary terminal and the network using terminal. Alternatively, a different method may be possible.

### (Embodiment 3: Processing of secondary terminal)

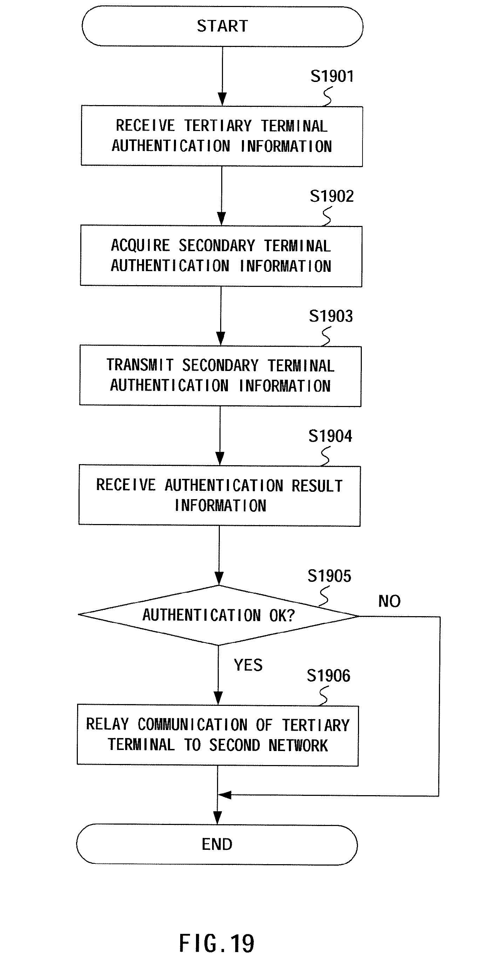

FIG.19 exemplifies a flow chart of processing by the secondary terminal in this embodiment. The secondary terminal executes the processing of the flow chart in FIG.19 every time it receives tertiary terminal authentication information. The secondary terminal receives the tertiary terminal authentication information at tertiary terminal authentication information reception section 1801 in step S1901. In step S1902, the secondary terminal acquires secondary terminal authentication information. This acquisition is performed, for example, at secondary terminal authentication information transmission section 601. In step S1903, the secondary terminal transmits secondary terminal authentication information by secondary terminal authentication information transmission section 601. In step S1904, the secondary terminal receives the replied authentication result information at secondary terminal authentication result information reception section 1802. In step S1905, the secondary terminal determines whether or not the authentication is OK. If the authentication is OK, the secondary terminal relays the communication of the tertiary terminal to the second network by secondary terminal relay section 1803.

### (Embodiment 3: Main effects)

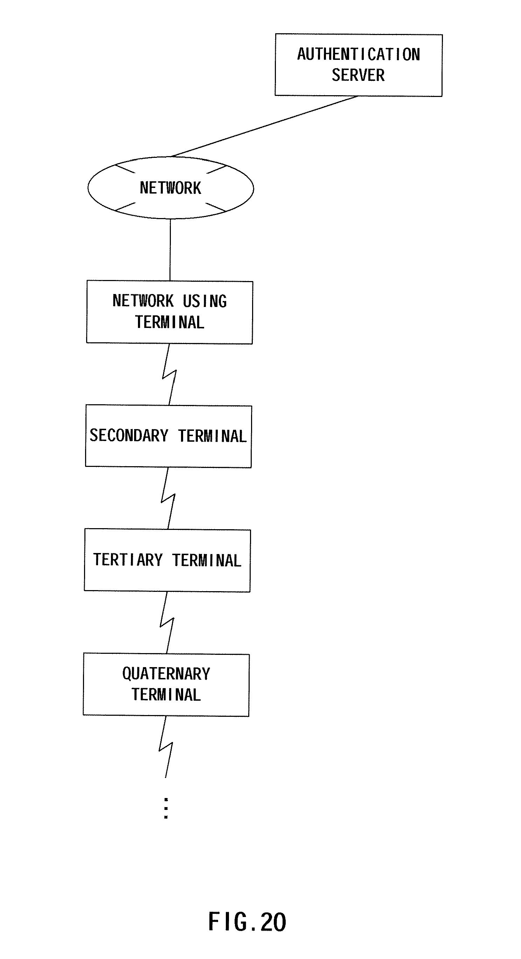

According to this embodiment, it is possible for the tertiary terminal that is able to communicate with the secondary terminal to use the first network and extend the area where the communication system according to the present invention is able to communicate. By promoting such an idea, as exemplified in FIG.20, the tertiary terminal is able to further communicate with a quarternary terminal, the quaternary terminal is able to use the first network, and the quaternary terminal is able to communicate with a quintic terminal. In this way, by mounting these terminals in mobile objects in a row such as automobiles running on a road, it is possible to make the network available to the mobile objects.

### (Embodiment 4)

Embodiment 4 of the present invention is equivalent to the network using terminal of the communication system according to Embodiment 1. In Embodiment 1, the network using terminal in the whole communication system is described, but in Embodiment 4, the network using terminal will be explained as a single unit.

That is, the network terminal according to this embodiment is a network using terminal connected to a first network by a channel and is able to communicate with a secondary terminal using a second network.

The network using terminal has a secondary terminal authentication information reception section, a compound authentication information transmission section, an authentication result information reception section and a relay section.

The "secondary terminal authentication information reception section" receives secondary terminal authentication information transmitted from the above described secondary terminal as information for authenticating the above described secondary terminal.

The "compound authentication information transmission section" transmits compound authentication information which is information including the secondary terminal authentication information received at the above described secondary terminal authentication information reception section and using terminal authentication information for authenticating the subject.

The "authentication result information reception section" receives the authentication result information which is information replied in response to transmission of the above described compound authentication information and is information indicating the authentication result based on the above described compound authentication information.

The "relay section" relays communication of the above described secondary terminal to the above described first network based on the authentication result information received at the above described authentication result information reception section, thereby permitting the above described secondary terminal to use the above described first network.

The processing of the network using terminal has already been explained using FIG.9, and their explanations will be omitted.

### (Embodiment 5)

Embodiment 5 of the present invention is equivalent to the authentication server of the communication system according to Embodiment 1.

That is, the authentication server according to this embodiment is an authentication server which communicates with a network using terminal that is able to communicate with a secondary terminal. The secondary terminal is the terminal apparatus as explained above.

The authentication server has a compound authentication information reception section, an authentication section and an authentication result reply section.

The "compound authentication information reception section" receives compound authentication information including secondary terminal authentication information which is information for authenticating the above described secondary terminal and using terminal authentication information which is information for authenticating the above described network using terminal from the above described network using terminal.

The "authentication section" authenticates the above described secondary terminal and the above described network using terminal based on the compound authentication information received at the above described compound authentication information reception section.

The "authentication result reply section" replies the result of the authentication in the above described authentication section as the authentication result information.

The processing of the authentication server has already been explained using FIG.11, and their explanations will be omitted.

### (Embodiment 6)

Embodiment 6 of the present invention is equivalent to the secondary terminal of the communication system according to Embodiment 2.

That is, the secondary terminal according to this embodiment is a terminal with which communication is possible using a network using terminal connected to a first network that is able to communicate with a service providing server which provides a service and a second network.

The secondary terminal has a secondary terminal authentication information transmission section.

The "secondary terminal authentication information transmission section" includes service providing server identification information which is information for identifying the above described service providing server which carries out a communication using the above described first network in secondary terminal authentication information which is information for authenticating the subject, and transmits the result to the above described network using terminal using a second network. Here, "the subject" represents the secondary terminal.

### (Embodiment 7)

Embodiment 7 of the present invention is equivalent to the network using terminal of the communication system according to Embodiment 2.
Therefore, the network using terminal according to this embodiment is the network using terminal according to Embodiment 4, wherein the first network is able to communicate with the service providing server which provides a service; the above described secondary terminal authentication information includes service providing server identification information which is information for identifying the above described service providing server with which the secondary terminal carries out a communication using the above described first network; and the above described relay section relays communication of the above described secondary terminal to the above described service providing server through the above described first network based on the authentication result received at the above described authentication result information reception section, thereby permitting the above described secondary terminal to use the above described first network.

### (Embodiment 8)

Embodiment 8 of the present invention is equivalent to the authentication server of the communication system according to Embodiment 2.
Therefore, the authentication server according to this embodiment is the authentication server according to Embodiment 5, wherein the above described network using terminal is able to communicate with the service providing server which provides a service using the first network; the above described secondary terminal authentication information includes service providing server identification information which is information for identifying the above described service providing server with which the secondary terminal carries out a communication using the above described first network; and the above described authentication section authenticates the above described service providing server based on the compound authentication information received at the above described compound authentication information reception section.

### (Embodiment 9)

Embodiment 9 of the present invention is equivalent to the network using terminal of the communication system according to Embodiment 3.
Therefore, the network using terminal according to this embodiment has a configuration where the network using terminal of Embodiment 4 or 7 has an authentication result information transmission section that transmits the authentication result information received at the authentication result information reception section to the above described secondary terminal.

### (Embodiment 10)

Embodiment 10 of the present invention is equivalent to the authentication server of the communication system according to Embodiment 3.
Therefore, the authentication server according to this embodiment is the authentication server according to Embodiment 5 or 8, wherein the above described secondary terminal is able to communicate with a tertiary terminal that transmits tertiary terminal authentication information which is information for authenticating the tertiary terminal using a third network; the above described secondary terminal includes the above described tertiary terminal authentication information in the secondary terminal authentication information and transmits the result; and the above described authentication section further authenticates the above described tertiary terminal based on the compound authentication information received at the above described compound authentication information reception section.

### (Embodiment 11)

Embodiment 11 according to the present invention is a method for causing a network using terminal, secondary terminal and authentication server to communicate with each other so that, for example, the communication system of Embodiment 1 operates.

That is, the method according to this embodiment is a method that allows a network using terminal connected to a first network through a channel, a secondary terminal that is able to communicate with the above described network using terminal using a second network and an authentication server to communicate with each other, and includes a secondary terminal authentication information transmission step, a secondary terminal authentication information reception step, a compound authentication information transmission step, an authentication result information reception step, a relay step, a compound authentication information reception step, an authentication step and an authentication result reply step.

The "secondary terminal authentication information transmission step" is a step in which the secondary terminal transmits the secondary terminal authentication information which is information for authenticating the subject terminal to the above described network using terminal using the above described second network. For example, it is equivalent to step S1201 in FIG.12.

The "secondary terminal authentication information reception step" is a step in which the network using terminal receives the secondary terminal authentication information transmitted in the above described secondary terminal authentication information transmission step. For example, it is equivalent to step S1201 in FIG.12.

The "compound authentication information transmission step" is a step in which the network using terminal transmits compound authentication information which is information including the secondary terminal authentication information received in the above described secondary terminal authentication information reception step and the using terminal authentication information which is information for authenticating the network using terminal. For example, it is equivalent to step S1202 in FIG.12.

The "authentication result information reception step" is a step in which the network using terminal receives the authentication result information replied in response to transmission of the above described compound authentication information. For example, it is equivalent to step S1202 in FIG.12.

The "relay step" is a step in which the network using terminal relays communication of the above described secondary terminal to the above described first network based on the authentication result information received in the above described authentication result information reception step, thereby permitting the above described secondary terminal to use the above described first network. For example, it equivalent to steps S905 and S906 in FIG.9.

The "compound authentication information reception step" is a step in which the authentication server receives the compound authentication information transmitted from the above described network using terminal. For example, it is equivalent to step S1202 in FIG.12.

The "authentication step" is a step in which the authentication server authenticates the above described secondary terminal and network using terminal based on the compound authentication information received in the above described compound authentication information reception step. For example, it is equivalent to step S1102 in FIG.11.

The "authentication result reply step" is a step in which the authentication server replies the authentication result in the above described authentication step. For example, it is equivalent to step S1203 in FIG.12.

The present application is based on Japanese Patent Application No. 2004-149126 filed on May 19, 2004, the entire content of which is expressly incorporated by reference herein.

### Industrial Applicability

The communication system according to the present invention is able to promote the use of a surplus band of a channel and is also able to smoothly perform, for example, billing management on a person who provides the band of the channel and a person who uses the band, and is therefore industrially useful.

## Claims

1. A communication system comprising:
a network using terminal connected to a first network;
a secondary terminal that is able to communicate with said network using terminal through a second network; and
an authentication server that is able to communicate with said network using terminal through said first network, wherein:
said secondary terminal comprises a secondary terminal authentication information transmission section that transmits secondary terminal authentication information including information for authenticating the secondary terminal to said network using terminal,
said network using terminal comprises:
a compound authentication information transmission section that transmits compound authentication information which is information including said secondary terminal authentication information transmitted from said secondary terminal and using terminal authentication information which is information for authenticating the secondary terminal to said authentication server;
an authentication result information reception section that receives authentication result information which is a result of the authentication based on said compound authentication information from said authentication server; and
a relay section that relays communication of said secondary terminal to said first network based on said authentication result information, thereby permitting said secondary terminal to use said first network; and
said authentication server comprises:
a compound authentication information reception that receives said compound authentication information transmitted from said network using terminal;
an authentication section that authenticate said secondary terminal and said network using terminal based on said compound authentication information; and
an authentication result reply section that replies the authentication result to said network using terminal as said authentication result information.

2. The communication system according to claim 1, further comprising a service providing server that provides a service through said first network, wherein:
the secondary terminal authentication information transmitted by the secondary terminal authentication information transmission section of said secondary terminal includes service providing server identification information which is information for identifying said service providing server with which the secondary terminal carries out a communication using said first network;
said relay section of said network using terminal relays communication of said secondary terminal to said service providing server through said first network based on said authentication result information, thereby permitting said secondary terminal to use said first network; and
the authentication section of said authentication server authenticates said service providing server based on the compound authentication information received at said compound authentication information reception section.

3. The communication system according to claim 1, further comprising a tertiary terminal that is able to communicate with said secondary terminal through a third network, wherein:
said tertiary terminal comprises a tertiary terminal authentication information transmission section that transmits tertiary terminal authentication information which is information for authenticating the tertiary terminal to said secondary terminal,
said secondary terminal comprises:
a tertiary terminal authentication information reception section that receives the tertiary terminal authentication information transmitted from said tertiary terminal;
a secondary terminal authentication result information reception section that receives the authentication result information replied in response to transmission of said secondary terminal authentication information; and
a secondary terminal relay section that relays communication of said tertiary terminal based on the authentication result information received at said secondary terminal authentication result information reception section, thereby permitting said tertiary terminal to use said first network;
said secondary terminal authentication information transmission section includes the tertiary terminal authentication information received at said tertiary terminal authentication information reception section in said secondary terminal authentication information and transmits the result;
said network using terminal comprises an authentication result information transmission section that transmits the authentication result information received at said authentication result information reception section to said secondary terminal; and
said authentication section of said authentication server further authenticates said tertiary terminal based on the compound authentication information received at said compound authentication information reception section.

4. A network using terminal connectable to a first network and is able to communicate with a secondary terminal through a second network and communicate with an authentication server through said first network, the network using terminal comprising:
a secondary terminal authentication information reception section that receives secondary terminal authentication information which is information for authenticating said secondary terminal transmitted from said secondary terminal;
a compound authentication information transmission section that transmits compound authentication information which is information including secondary terminal authentication information received at said secondary terminal authentication information reception section and using terminal authentication information which is information for authenticating the secondary terminal to said authentication server;
an authentication result information reception section that receives authentication result information which is information replied in response to transmission of said compound authentication information and information indicating the authentication result based on said compound authentication information from said authentication server; and
a relay section that relays communication of said secondary terminal to said first network based on the authentication result information received at said authentication result information reception section, thereby permitting said secondary terminal to use said first network.

5. An authentication server communicates, through a first network, with a network using terminal that is able to communicate with a secondary terminal through a second network, comprising:
a compound authentication information reception section that receives compound authentication information which is information including secondary terminal authentication information which is information for authenticating said secondary terminal and using terminal authentication information which is information for authenticating said network using terminal from said network using terminal;
an authentication section that authenticates said secondary terminal and said network using terminal based on the compound authentication information received at said compound authentication information reception section; and
an authentication result reply section that replies the authentication result at said authentication section to said network using terminal as the authentication result information.

6. The network using terminal according to claim 4, wherein:
said network using terminal is able to communicate with a service providing server that provides a service through said first network;
said secondary terminal authentication information includes service providing server identification information which is information for identifying said service providing server with which the secondary terminal carries out a communication using said first network; and
said relay section relays communication of said secondary terminal to said service providing server through said first network based on the authentication result received at said authentication result information reception section, thereby permitting said secondary terminal to use said first network.

7. The authentication server according to claim 5, wherein:
said secondary terminal authentication information includes service providing server identification information which is information for identifying a service providing server that provides a service through said first network; and
said authentication section authenticates said service providing server based on the compound authentication information received at said compound authentication information reception section and authenticates communication between said secondary terminal and said service providing server.

8. The authentication server according to claim 5, wherein:
said secondary terminal authentication information includes tertiary terminal authentication information which is information for authenticating a tertiary terminal with which said secondary terminal communicates using a third network; and
said authentication section authenticates said tertiary terminal based on the compound authentication information received at said compound authentication information reception section.

9. A communication method for causing a network using terminal connected to a first network, a secondary terminal that is able to communicate with said network using terminal through a second network and an authentication server that is able to communicate with said network using terminal through said first network to communicate with each other, the communication method comprising:
a secondary terminal authentication information transmission step in which said secondary terminal transmits secondary terminal authentication information which is information for authenticating the secondary terminal to said network using terminal;
a secondary terminal authentication information reception step in which said network using terminal receives the secondary terminal authentication information transmitted in said secondary terminal authentication information transmission step;
a compound authentication information transmission step in which said network using terminal transmits compound authentication information which is information including the secondary terminal authentication information received in said secondary terminal authentication information reception step and using terminal authentication information which is information for authenticating the secondary terminal;
a compound authentication information reception step in which said authentication server receives the compound authentication information transmitted from said network using terminal;
an authentication step in which said authentication server authenticates said secondary terminal and said network using terminal based on the compound authentication information received in said compound authentication information reception step;
an authentication result reply step in which said authentication server sends in reply the result of the authentication in said authentication step to said network using terminal as the authentication result information;
an authentication result information reception step in which said network using terminal receives said authentication result information; and
a relay step in which said network using terminal relays communication of said secondary terminal to said first network based on said authentication result information, thereby permitting said secondary terminal to use said first network.
